# EUROPÄISCHE PATENTSCHRIFT

(11) **EP 1 954 550 B1**
(45) Veröffentlichungstag und Bekanntmachung des Hinweises auf die Patenterteilung: **15.07.2009**
(21) Anmeldenummer: 06818752.5
(22) Anmeldetag: 23.11.2006
(51) Int. Cl.: B62D 29/00, B62D 25/08

(54) **MONTAGETRÄGER IN HYBRIDSTRUKTUR**
HYBRID-STRUCTURE ASSEMBLY SUPPORT
SUPPORT DE MONTAGE DE STRUCTURE HYBRIDE

(30) Priorität: 23.11.2005 DE 102005055705
(43) Veröffentlichungstag der Anmeldung: 13.08.2008
(73) Patentinhaber: HBPO GmbH, 59557 Lippstadt (DE)
(72) Erfinder: FISCHER, Andreas, 35745 Herborn (DE); RAULF, Robert, 59556 Bad Waldliesborn (DE)
(74) Vertreter: Schober, Mirko
(86) Internationale Anmeldenummer: PCT/EP2006/011225
(87) Internationale Veröffentlichungsnummer: WO 2007/059954

(56) Entgegenhaltungen:
- EP-A1- 0 995 668
- EP-A2- 1 211 164
- WO-A2-20/04056610
- DE-U1- 20 310 156

## Beschreibung

### Technisches Gebiet

Die Erfindung bezieht sich auf einen Montageträger gemäß den Merkmalen des Oberbegriffs des Patentanspruchs 1. Das Dokument EP-A-1 211 164 beschreibt einem solchen Montageträger.

### Stand der Technik

Solche für Frontends von Personen- und Kleinlastkraftwagen bestimmte Montageträger in Hybridbauweise sind im modernen Fahrzeugbau üblich und daher allgemein bekannt. Hybridbauteile dieser Art zeichnen sich durch gute Gebrauchseigenschaften aus, die in dem geringen Gewicht relativ zu den technologischen Eigenschaften, wie Steifigkeit und/oder Festigkeit, zu sehen sind. Des weiteren ermöglichen die Hybridbauteile eine kostengünstige Fertigung im Spritzgießprozeß. In der bekannten Ausführung weisen die Montageträger Hybridstrukturen in Schalenform auf, an deren Hohlseite versteifende Kunststoffrippen vorgesehen sind. Die damit erreichte Steifigkeit des jeweiligen Montageträgers kann in denjenigen Bereichen noch unzureichend sein, in die große Kräfte, beispielsweise durch Motoraufhängungen eingeleitet werden. Dies betrifft die unteren Bereiche des Montageträgers, insbesondere dessen unteren Querträger.

Aus dem Dokument DE 203 10 156 U1 ist es grundsätzlich bekannt, im Kraftfahrzeugbau Metallprofilteile zu verwenden, die aus zwei Metallprofilen oder Metallprofilblechen bestehen, die plan- und deckungsgleich aufeinanderliegende Randabschnitte aufweisen und in diesen Randabschnitten mit Durchbrüchen versehen sind. Die Randabschnitte sind mittels Kunststoff umspritzt, wobei der Kunststoff durch die Durchbrüche der Randabschnitte hindurchdringt und deren Endkanten umgreift. Auf diese Weise sind die Metallprofile miteinander verbunden.

### Die Erfindung

Der Erfindung liegt die Aufgabe zugrunde, unter Verwendung der vorgenanten Technik einen Montageträger der eingangs genannten Art zu schaffen, der im Bereich des unteren Querträgers und der Seitenträgerunterabschnitte verstärkt ist.

Diese Aufgabe wird bei einem Montageträger der vorgenannten Art durch die kennzeichnenden Merkmale des Patentanspruchs 1 gelöst.

Für den erfindungsgemäßen Montageträger ist wesentlich, daß sein unterer Querträger wie auch die Seitenträgerunterabschnitte als geschlossene Versteifungsprofile ausgebildet sind, welche aus einem steifen Werkstoff, vornehmlich aus Metall, bestehen und zwei miteinander korrespondierende Teile, nämlich die Schalenkörper und die Verschlußteile aufweisen, die mittels des für die Hybridbauweise verwendeten Kunststoffs sowohl miteinander als auch mit den an sie angrenzenden Bereichen des Montageträgers fest verbunden sind. So können nicht nur der untere Querträger und die Seitenträgerunterabschnitte des Montageträger hohe Torsions- und/oder Biegekräfte aufnehmen, sie versteifen auch den Montageträger über die sich anschließenden Seitenträger insgesamt.

Weitere vorteilhafte Ausgestaltungsmerkmale der Erfindung ergeben sich aus den Unteransprüchen.

### Kurzbeschreibung der Zeichnungsabbildungen

Die Erfindung wird nachfolgend anhand der Zeichnung an einem Ausführungsbeispiel noch näher erläutert. Dabei zeigen:
- Fig. 1: eine perspektivische Darstellung eines Montageträgers für ein Frontend eines Personenkraftwagens von der Vorderseite gesehen,
- Fig. 2: eine perspektivische, gesprengte Darstellung der Metallteile und der Kunststoffbereiche des Montageträgers nach Figur 1,
- Fig. 3: einen Querschnitt durch den unteren Querträger des Montageträgers nach Figur 1 in vergrößerter Wiedergabe und
- Fig. 4: eine weiter vergrößerte Darstellung durch einen der Verbindungsbereiche der beiden Metallbauteile des Querträgers gemäß Figur 3.

### Weg zur Ausführung der Erfindung

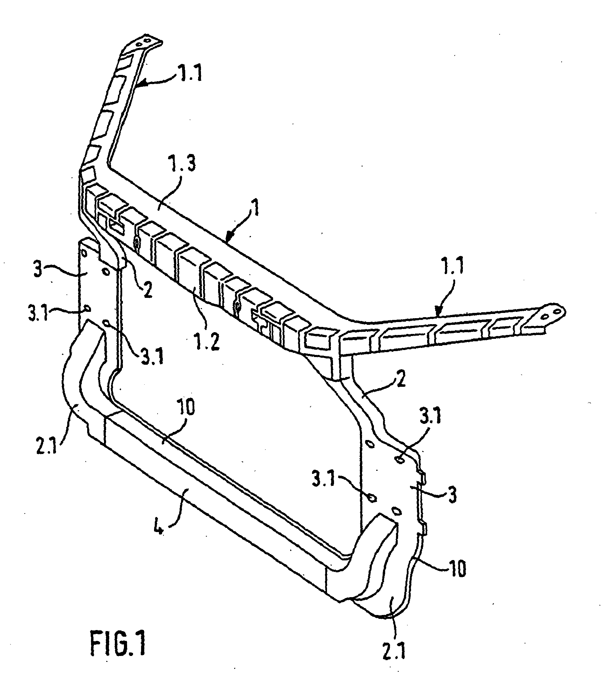

Im einzelnen erkennt man an dem in Figur 1 dargestellten Montageträger einen oberen Querträger 1, an den nach unten hin Seitenträger 2 anschließen. Beidendig weist der obere Querträger 1 Befestigungsarme 1.1 auf, welche den oberen Querträger 1 über die Anschlußbereiche der Seitenträger 2 hinaus verlängern. In die Seitenträger 2 sind Flanschplatten 3 integriert, die mit Durchgangslöchern 3.1 zum Verschrauben mit Gegenflanschplatten versehen sind, die sich an den vorderen Stirnenden der Fahrzeuglängsträger befinden. An die Flanschplatten 3 schließen nach unten hin Unterabschnitte 2.1 der Seitenträger 2 an, zwischen denen sich ein unterer Querträger 4 erstreckt.

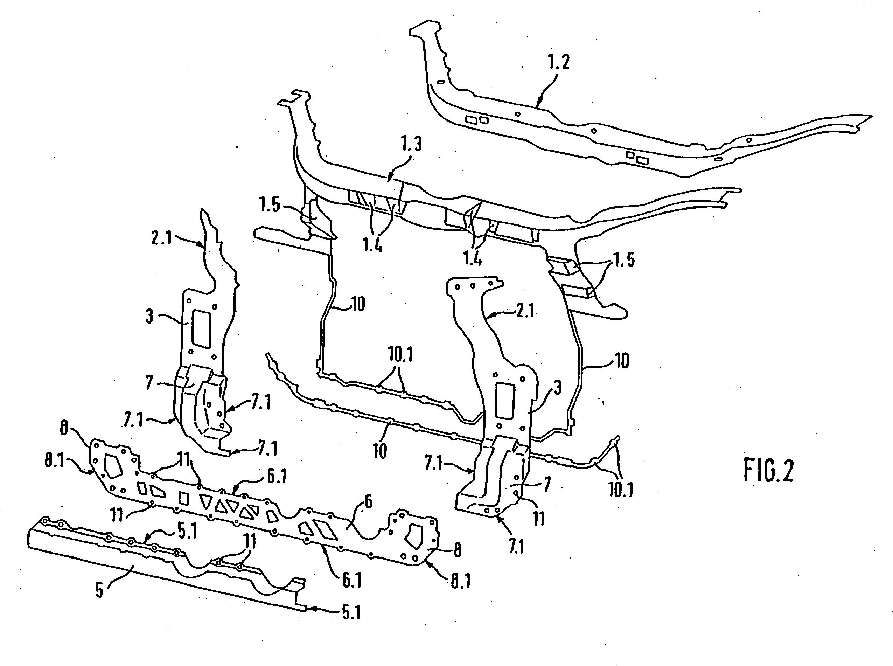

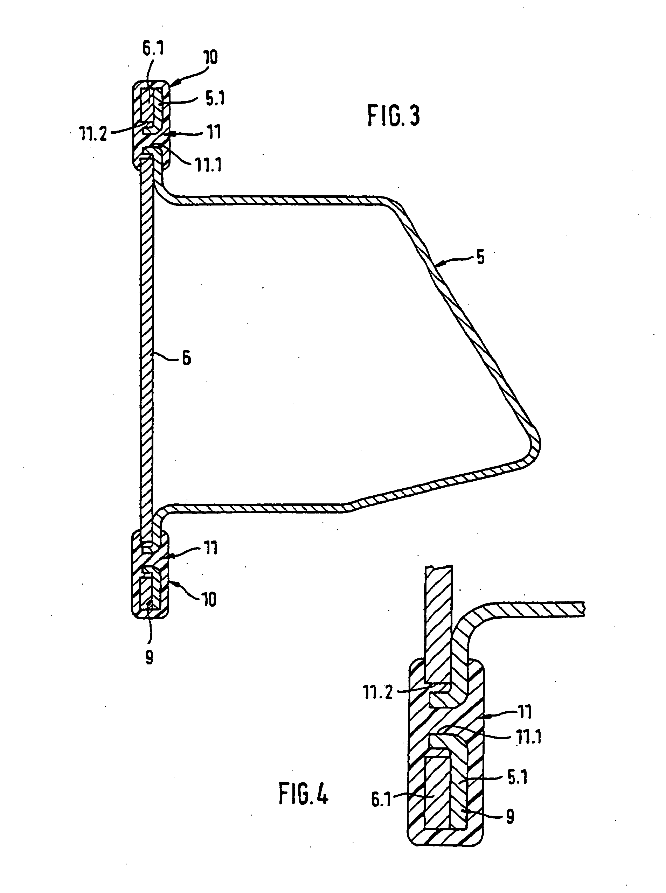

Der in Figur 1 dargestellte Montageträger ist ein Hybridbauteil, welches aus steifen Elementen, nämlich solchen aus Stahl, und aus diese Elemente miteinander verbindendem sowie bereichsweise verstärkendem Kunststoff besteht. Einzelheiten hierzu ergeben sich aus Figur 2. Der obere Querträger 1 des Montageträgers weist einen Metallträger 1.2 auf, der aus einem rückseitig offenen Hohlprofil besteht. Verstärkt ist der Metallträger 1.2 mittels Kunststoffstegen 1.3 und -rippen 1.4, die im Hohlbereich des Metallträgers 1.2 angeordnet sind. Einstückig mit den Kunststoffstegen 1.3 und Kunststoffrippen 1.4 ist eine Kunststoffummantelung oder -einfassung 10, von der in Figur 2 im wesentlichen ihr linienförmiger Verlauf zu erkennen ist. Auf diese Kunststoffbereiche wird nachstehend anhand der Figuren 3 und 4 noch näher eingegangen.

Weiter sind in Figur 2 die Metallteile dargestellt, welche die kraftübertragenden Teile der Seitenträger 2 und des unteren Querträgers 4 des Montageträgers 1 bilden. Die Metallteile der Seitenträger 2 sind in deren oberen Bereich 2.1 ebenfalls als schalenförmige Hohlkörper ausgebildet, welche mittels Kunststoffstegen bzw. -rippen 1.5 versteift sind. Auch diese Kunststoffteile sind einstückig mit den weiteren Kunststoffbereichen des Hybridbauteils.

Zu den kraftübertragenden, aus Stahlblech geformten Metallteilen des unteren Querträgers 4 gehört ein erster Schalenkörper 5, der als Hohlträger ausgeführt ist und einen etwa U-förmigen Querschnitt hat. An den einander gegenüberliegenden Seitenwandungen des Schalenkörpers 5 finden sich nach außen hin abgewinkelte, vorstehende Flansche 5.1, wie sich im einzelnen auch aus Figur 3 ergibt. Der hohle Schalenkörper 5 ist an seiner offenen Seite mittels einem Verschlußteil 6 verschlossen, welches ebenfalls aus Stahl besteht und als flaches, plattenförmiges Bauteil mit Durchbrüchen 6.2 ausgebildet ist. So weist das Verschlußteil 6 einen Randbereich 6.1 auf, der an den Flanschen 5.1 des Schalenkörpers 5 flächig anliegt. An dem Verschlußteil 6 sind an beiden Enden nach oben hin vorstehende, weitere Verschlußteile 8 angeordnet, die grundsätzlich separat vorgesehen werden können oder an das erste Verschlußteil 6 fest angesetzt sind. In der dargestellten, bevorzugten Bauform sind die beiden Verschlußteile 6 und 8 durchgehend einstückig miteinander, wobei sich die Randbereiche 6.1 des ersten Verschlußteils 6 in Randbereichen 8.1 des zweiten Verschlußteils 8 fortsetzen.

Die zweiten Verschlußteile 8 sind auf zweite Schalenkörper 7 abgestimmt, welche in die unteren Bereiche der Stahlblechteile der Seitenträger 2, welche auch die Flanschplatten 3 bilden, eingeformt sind. Die zweiten Schalenkörper 7 weisen ebenso wie die ersten Schalenkörper 5 randliche, nach außen wegstehende Flansche 7.1 auf, die an den Randbereichen 8.1 der zweiten Verschlußteile 8 flächig anliegen. Die oberen Abschnitte der zweiten Schalenkörper 7 können bis an den oberen Querträger 1 des Montageträgers heranreichen.

Der Zusammenhalt der Schalenkörper 5 und 7 mit den Verschlußteilen 6 und 8 erfolgt über die Kunststoffummantelung oder -einfassung 10, die über weite Abschnitte hinweg im Querschnitt U-förmig ist, um die Randbereiche 6.1, 8.1 der Verschlußteile 6, 8 und die daran anliegenden Flansche 5.1, 7.1 der Schalenkörper 5, 7 von außen her zu umgreifen. In Abständen sind an diesen aneinanderliegenden Randbereichen, 6.1, 8.1 und Flanschen 5.1, 7.1 sogenannte Durchspritzpunkte gebildet, deren Einzelheiten sich aus den Figuren 3 und 4 ergeben. Für diese Durchspritzpunkte sind miteinander fluchtende Durchbrechungen 11 in den Flanschen 5.1, 7.1 und den Randbereichen 6.1, 8.1 vorgesehen, die unterschiedlich ausgebildet sein können. An den Durchspritzpunkten bildet sich aus dem Kunststoff ein Verbindungsbolzen oder -steg aus, wie es in Fig. 2 bei 10.1 angedeutet ist.

Wie in Fig. 3 und Fig. 4 dargestellt, haben die Flansche 5.1, 7.1 der Schalenkörper 5, 7 Durchbrechungen 11 in Gestalt kreisrunder Löcher, deren Randbereiche umgeformt sind. Dadurch sind um die Durchbrechungen 11.1 herum Lochkragen 12 gebildet, die an derjenigen Seite der Flansche 5.1, 7.1 vorstehen, an der die Randbereiche 6.1, 8.1 der Verschlußteile 6.8 anliegen. Die zweiten Durchbrechungen 11.2 in diesen Randbereichen 6.1, 8.1 sind ebenfalls kreisrunde Löcher und haben einen Innendurchmesser, der, größer als der Außendurchmesser der Lochkragen 12 ist. Der die Ummantelung 10 bildende Kunststoff tritt somit nicht nur durch die ersten Durchbrechungen 11.1 in den Flanschen 5.1, 7.1 der Schalenkörper 5, 7 hindurch, sondern füllt auch den Ringspalt aus, der zwischen dem Außenumfang der Lochkragen 12 und der Laibung der zweiten Durchbrechungen 11.2 in den Randbereichen 6.1, 8.1 der Verschlußteile 6, 8 besteht. Dies ist besonders deutlich in Figur 4 dargestellt. Die Ausbildung der Durchspritzpunkte, wie sie vorstehend beschrieben ist, eignet sich nicht nur zum Verbinden von Schalenkörpern der erörterten Art. Vielmehr kann diese Art der Durchspritzung immer dann angewendet werden, wenn es um die Verbindung von Metalleinlagen oder sonstigen Einlagen aus einem festen Werkstoff bei im Kunststoffspritzgußverfahren hergestellten Hybridbauteilen geht.

## Patentansprüche

1. Montageträger für ein Frontend für Personen- und Kleinlastkraftwagen, wobei dieser Montageträger in Hybridbauweise aus einem Kunststoff und aus mit dem Kunststoff umspritzten Bauteilen eines steifen Werkstoffs, wie Stahl, ausgeführt ist und einen oberen Querträger (1), daran nach unten hin anschließende Seitenträger (2) mit einer Flanschplatte (3) zur Verbindung mit den Stirnenden von Fahrzeuglängsträgern und einen die Unterabschnitte (2.1) der Seitenträger (2) verbindenden, unteren Querträger (4) aufweist,
**dadurch gekennzeichnet,**
**daß** der untere Querträger (4) aus einem Schalenkörper (5) mit einem randlich entlanglaufenden, nach außen vorstehenden Flansch (5.1) und aus einem mit seinem Randbereich (6.1) deckungsgleich darauf aufgesetzten Verschlußteil (6) besteht, wobei der Schalenkörper (5) und das Verschlußteil (6) aus einem steifen Werkstoff bestehen und der Flansch (5.1) des Schalenkörpers (5) sowie der Randbereich (6.1) des Verschlußteils (6) mittels des für die Hybridbauweise verwendeten Kunststoffs umspritzt und **dadurch** miteinander sowie mit den Seitenträgern (2) verbunden sind,
und **daß** ebenfalls die Seitenträgerunterabschnitte (2.1) jeweils aus einem Schalenkörper (7) mit einem randlich entlanglaufenden, nach außen vorstehenden Flansch (7.1) und aus einem mit seinem Randbereich (8.1) deckungsgleich darauf aufgesetzten Verschlußteil (8) bestehen, wobei die Schalenkörper (7) und die Verschlußteile (8) aus einem steifen Werkstoff bestehen und die Flansche (7.1) der Schalenkörper (7) sowie die Randbereiche (8.1) der Verschlußteile (8) mittels des für die Hybridbauweise verwendeten Kunststoffs umspritzt und **dadurch** miteinander sowie mit den weiteren Bereichen der Seitenträger (2) und dem unteren Querträger (4) verbunden sind,
und **daß** der untere Querträger (4) und die Unterabschnitte (2.1) der Seitenträger (2) jeweils separate Schalenkörper (5, 7) aufweisen und die mit diesen Schalenkörpern (5, 7) mittels des Kunststoffs verbundenen Verschlußteile (6, 8) miteinander einstückig sind.

2. Montageträger nach Anspruch 1,
**dadurch gekennzeichnet,**
**daß** das Verschlußteil (6) für den Schalenkörper (5) des unteren Querträgers (4) und/oder die Verschlußteile (8) für die Schalenkörper (7) der Seitenträgerunterabschnitte (2.1) als flaches Bauteil nach Art einer Platte ausgebildet sind.

3. Montageträger nach Anspruch 1 oder 2 ,
**dadurch gekennzeichnet,**
**daß** das Verschlußteil (6) für den Schalenkörper (5) des unteren Querträgers (4) und/oder die Verschlußteile (8) für die Schalenkörper (7) der Seitenträgerunterabschnitte (2.1) als schalenförmige Profilteile ausgebildet sind.

4. Montageträger nach einem der Ansprüche 1 - 3,
**dadurch gekennzeichnet,**
**daß** die Flansche (5.1, 7.1) der Schalenkörper (5, 7) und die Randbereiche der (6.1, 8.1) der Verschlußteile (6, 8) des unteren Querträgers (4) und der Seitenträger (2) jeweils gemeinsam einen Flachsteg (9) bilden und daran der umspritzte, verbindende Kunststoff eine im Querschnitt U-förmige Ummantelung (10) bildet.

5. Montageträger nach einem der Ansprüche 1 - 4,
**dadurch gekennzeichnet,**
**daß** die Flansche (5.1, 7.1) der Schalenkörper (5, 7) einerseits und die Randbereiche (6.1, 8.1) der Verschlußteile (6, 8) des unteren Querträgers (4) und der Seitenträger (2) andererseits miteinander deckungsgleiche Durchbrechungen (11) haben, die mittels des Kunststoffs durchspritzt sind.

6. Montageträger nach Anspruch 5,
**dadurch gekennzeichnet,**
**daß** von den miteinander korrespondierenden Durchbrechungen (11) an den Flanschen (5.1, 7.1) der Schalenkörper (5, 7) und den Randbereichen (6.1, 8.1) der Verschlußteile (6, 8) die ersten Durchbrechungen (11.1) zu vorstehenden Lochkragen (12) umgeformte Ränder haben, welche in die zweiten Durchbrechungen (11.2) hineinragen, wobei die zweiten Durchbrechungen (11.2) einen über den Außendurchmesser der Lochkragen (12) hinaus vergrößerten Innendurchmesser aufweisen.

## Claims

1. Assembly support for a front end for motor cars and light trucks wherein this assembly support is constructed in hybrid fashion from plastics and from components of rigid material, such as steel, encased in plastics and has an upper cross member (1), side members (2) adjoining the latter downwards with a flange plate (3) to connect with the ends of vehicle longitudinal members and also has a lower cross member (4) which connects the lower sections (2.1) of the side members (2),
**characterised in that** the lower cross member (4) consists of a shell body (5) with an outwardly projecting flange (5.1) running along the edge and of a closure part (6) which fits thereon with its edge area (6.1) lined up with same wherein the shell body (5) and the closure part (6) are made from a rigid material and the flange (5.1) of the shell body (5) as well as the edge area (6.1) of the closure part (6) are encased in the injection-moulded plastics used for the hybrid structure and are thereby connected to one another as well as to the side members (2),
and that the side member lower sections (2.1) are each likewise made from a shell body (7) with an outwardly projecting flange (7.1) running along the edges thereof and from a closure part (8) which fits thereon with its edge area (8.1) lined up with same, wherein the shell body (7) and the closure parts (8) are made from a rigid material and the flanges (7.1) of the shell bodies (7) as well as the edge areas (8.1) of the closure parts (8) are encased by means of the injection-moulded plastics used for the hybrid structure and are thereby connected to one another as well as to the further areas of the side members (2) and the lower cross member (4),
and that the lower cross member (4) and the lower sections (2.1) of the side members (2) each have separate shell bodies (5, 7) and the closure parts (6,8) connected to these shell bodies (5, 7) by means of the plastics are integral with one another.

2. Assembly support according to claim 1 **characterised in that** the closure part (6) for the shell body (5) of the lower cross member (4) and/or the closure parts (8) for the shell bodies (7) of the side member lower sections (2.1) are designed as a flat component part in the manner of a plate.

3. Assembly support according to claim 1 or 2 **characterised in that** the closure part (6) for the shell body (5) of the lower cross member (4) and/or the closure parts (8) for the shell bodies (7) of the side member lower sections (2.1) are designed as shell-type profiled parts.

4. Assembly support according to one of claims 1 to 3 **characterised in that** the flanges (5.1, 7.1) of the shell bodies (5, 7) and the edge areas (6.1, 8.1) of the closure parts (6, 8) of the lower cross member (4) and the side members (2) each form together a flat web (9) and the connecting plastics which is injection-moulded around same forms a casing (10) of U-shaped cross-section.

5. Assembly support according to one of claims 1 to 4 **characterised in that** the flanges (5.1, 7.1) of the shell bodies (5, 7) on the one side and the edge areas (6.1, 8.1) of the closure parts (6, 8) of the lower cross member (4) and side members (2) on the other side have congruently aligned apertures (11) through which the plastics is injected.

6. Assembly support according to claim 5 **characterised in that** of the mutually corresponding apertures (11) on the flanges (5.1, 7.1) of the shell bodies (5, 7) and the edge areas (6.1, 8.1) of the closure parts (6, 8) the first apertures (11.1) have edges shaped round into protruding punched collars (12) which project into the second apertures (11.2) wherein the second apertures (11.2) have an internal diameter which is enlarged beyond the external diameter of the punched collars (12).

## Revendications

1. Support de montage pour un bloc avant de voitures particulières et de camionnettes, ce support de montage étant exécuté en tant que structure hybride, en matière plastique et en composants en matériau rigide, tel que de l'acier, enrobé par projection avec ladite matière plastique, et présentant un support transversal supérieur (1), des supports latéraux (2) dotés d'une plaque à bride (3) pour le raccordement aux extrémités frontales de supports longitudinaux de véhicules automobiles, et un support transversal inférieur (4), qui relie les sections inférieures (2.1) des supports latéraux (2),
**caractérisé en ce que**
le support transversal inférieur (4) est constitué par un corps en forme de coque (5), avec une bride (5.1) en saillie vers l'extérieur, s'étendant le long du bord, et une pièce de fermeture (6), rapportée sur celui-ci, en coïncidence, par sa région marginale (6.1), ledit corps en forme de coque (5) et la pièce de fermeture (6) consistant en un matériau rigide et la bride (5.1) du corps en forme de coque (5), ainsi que la région marginale (6.1) de la pièce de fermeture (6) étant enrobés par projection avec la matière plastique, utilisée pour la structure hybride, et étant ainsi reliés ensemble, ainsi qu'aux supports latéraux (2),
et **en ce que** les sections inférieures (2.1) des supports latéraux consistent chacun également en un corps en forme de coque (7), avec une bride (7.1) s'étendant le long du bord, en saillie vers l'extérieur, et en une pièce de fermeture (8), rapportée sur celui-ci en coïncidence par sa région marginale (8.1), le corps en forme de coque (7) et les pièces de fermeture (8) consistant en un matériau rigide et les brides (7.1) des corps en forme de coque (7), ainsi que les régions marginales (8.1) des pièces de fermeture (8) étant enrobées par projection avec la matière plastique, utilisée pour la structure hybride, et reliées ainsi ensemble, ainsi qu'avec les autres régions des supports latéraux (2) et le support transversal inférieur (4),
et **en ce que** le support transversal inférieur (4) et les sections inférieures (2.1) des supports latéraux (2) présentant respectivement des corps en forme de coque (5, 7) séparés, et les pièces de fermeture (6, 8), reliées à ces corps en forme de coque (5,7) au moyen de la matière plastique, formant ensemble une pièce.

2. Support de montage selon la revendication 1,
**caractérisé en ce que**
la pièce de fermeture (6) pour le corps en forme de coque (5) du support transversal inférieur (4) et / ou les pièces de fermeture (8) pour les corps en forme de coque (7) des sections inférieures (2.1) des supports latéraux sont réalisés à la manière d'une plaque, en tant que composant plat.

3. Support de montage selon revendication 1 ou 2,
**caractérisé en ce que**
la pièce de fermeture (6) pour le corps en forme de coque (5) du support transversal inférieur (4) et / ou les pièces de fermeture (8) pour les corps en forme de coque (7) des sections inférieures (2.1) des supports latéraux sont réalisées en tant que pièces profilées en forme de coque.

4. Support de montage selon l'une des revendications 1 à 3,
**caractérisé en ce que**
les brides (5.1, 7.1) des corps en forme de coque (5, 7) et les régions marginales (6.1, 8.1) des éléments de fermeture (6, 8) du support transversal inférieur (4) et des supports latéraux (2) forment respectivement, en commun, une patte plate (9), et la matière plastique projetée, assurant la liaison, forme un enrobage (10) de section transversale en forme de U.

5. Support de montage selon l'une des revendications 1 à 4,
**caractérisé en ce que**
les brides (5.1, 7.1) des corps en forme de coque (5,7), d'une part, et les régions marginales (6.1, 8.1) des pièces de fermeture (6, 8) du support transversal inférieur (4) et des supports latéraux (2), d'autre part, sont pourvues de perforations (11) coïncidentes, dans lesquelles la matière plastique est injectée.

6. Support de montage selon la revendication 5,
**caractérisé en ce que**,
les premières perforations (11.1) des perforations (11) des brides (5.1, 7.1) des corps en forme de coque (5,7) et des régions marginales (6.1, 8.1) des éléments de fermeture (6, 8), qui coïncident les unes avec les autres, possèdent des bords déformés en collerettes perforées (12) saillantes, qui pénètrent dans les deuxièmes perforations (11.2), lesdites deuxièmes perforations (11.2) présentant un diamètre intérieur qui est agrandi au-delà du diamètre extérieur des collerettes perforées (12).
